(19) Europäisches Patentamt
European Patent Office
Office européen des brevets

(11) EP 2 195 152 B1

(12) **EUROPÄISCHE PATENTSCHRIFT**

(45) Veröffentlichungstag und Bekanntmachung des Hinweises auf die Patenterteilung:
**14.11.2012 Patentblatt 2012/46**

(21) Anmeldenummer: **08804573.7**

(22) Anmeldetag: **23.09.2008**

(51) Int Cl.:
***B29C 47/10*** (2006.01) ***C08K 3/04*** (2006.01)
***C08K 5/00*** (2006.01) ***C08L 25/04*** (2006.01)

(86) Internationale Anmeldenummer:
**PCT/EP2008/062648**

(87) Internationale Veröffentlichungsnummer:
**WO 2009/043758 (09.04.2009 Gazette 2009/15)**

(54) **VERFAHREN ZUR HERSTELLUNG FLAMMGESCHÜTZTER THERMOPLASTISCHER FORMMASSEN**

METHODS FOR PRODUCING FLAMEPROOFED THERMOPLASTIC MOULDING COMPOUNDS

PROCEDE DE PRODUCTION DE MATERIAUX DE MOULAGE THERMOPLASTIQUES IGNIFUGES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007 EP 07117513**

(43) Veröffentlichungstag der Anmeldung:
**16.06.2010 Patentblatt 2010/24**

(73) Patentinhaber: **Styrolution GmbH**
**60325 Frankfurt am Main (DE)**

(72) Erfinder:
- **STAAL, Maarten**
**Durham, NC 27703 (US)**
- **GÜNTHERBERG, Norbert**
**67346 Speyer (DE)**
- **CHAROENSIRISOMBOON, Piyada**
**68165 Mannheim (DE)**
- **HEINEN, Hartmut**
**67067 Ludwigshafen (DE)**
- **NIESSNER, Norbert**
**67159 Friedelsheim (DE)**
- **HECKMANN, Walter**
**69469 Weinheim (DE)**

(74) Vertreter: **Jacobi, Markus Alexander et al**
**Isenbruck Bösl Hörschler LLP**
**Eastsite One**
**Seckenheimer Landstrasse 4**
**68163 Mannheim (DE)**

(56) Entgegenhaltungen:
**EP-A- 0 364 729**
**EP-A- 0 824 134**
**EP-A- 1 207 183**
**DE-A1- 19 856 759**
**DE-A1- 19 907 831**
**JP-A- 8 302 056**
**US-A1- 2006 118 989**
**US-A1- 2007 190 198**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 195 152 B1

## Beschreibung

Die Erfindung betrifft Verfahren zur Herstellung thermoplastischer Formmassen enthaltend

A) 39 bis 99 Gew.-% mindestens eines thermoplastischen Polymers,
B) 1 bis 60 Gew.-% einer Flammschutzmittelkomponente enthaltend B1) einen expandierbaren Graphit, und
C) 0 bis 60 Gew.-% weiterer Zusatzstoffe,

wobei die Gewichtsprozente jeweils auf das Gesamtgewicht der Komponenten A) bis C) bezogen sind und zusammen 100 Gew.-% ergeben,
durch Schmelzevermischung der Komponenten A), B) und, falls vorhanden, C) in einem Schneckenextruder, wobei der Schneckenextruder ein Doppelschnecken extruden ist und entlang der Förderrichtung in dieser Reihenfolge mindestens eine Dosierzone, eine Plastifizierzone, eine Homogenisierzone und eine Austragszone umfaßt.

Außerdem betrifft die vorliegende Erfindung thermoplastische Formmassen, welche nach diesen Verfahren herstellbar sind, die Verwendung besagter thermoplastischer Formmassen zur Herstellung von Fasern, Folien, Formkörpern und Schäumen sowie diese Fasern, Folien, Formkörper und Schäume selbst.

Mit expandierbarem Graphit, der auch als Blähgraphit bezeichnet wird, als Flammschutzmittel ausgerüstete thermoplastische Polymermassen sind bekannt.

Beispielsweise wird gemäß WO 03/046071 A1 expandierbarer Graphit in Polystyrol (PS) oder schlagzäh modifiziertem Polystyrol (HIPS) eingesetzt. Darüberhinaus wird laut dieser Schrift als weitere Flammschutzmittelkomponente eine halogenhaltige Verbindung in Mengen von 2 bis 11 %, gerechnet als Halogen, benötigt.

Aus beispielsweise toxikologischen Gründen ist es jedoch wünschenswert, den Einsatz halogenhaltiger Flammschutzmittel möglichst weitgehend zu vermeiden.

Halogenfrei flammgeschützte Thermoplaste, die expandierbaren Graphit und eine Phosphorverbindung als Flammschutzkomponenten enthalten, werden in WO 00/34367 und WO 00/34342 offenbart. Formmassen auf Basis solcherart flammgeschützter Styrolpolymerisate sind bzgl. ihres Abtropfverhaltens im Brandfall aber verbesserungswürdig. EP-A 0824134 beschreibt weitere flammgeschützte Polymerzusammensetzungen, die Graphit enthalten.

Die KR1996-0001006 offenbart flammgeschütztes Polystyrol, wobei die Flammschutzmittelkomponenten expandierbaren Graphit, eine Phosphorverbindung und Teflon umfassen. Die mittlere Teilchengröße des expandierbaren Graphits beträgt 5 $\mu$m. Das als Antitropfmittel zugesetzte Teflon wird in Mengen von 1 bis 5 Gewichtsprozent eingesetzt. Die so erhaltenen halogenfrei flammgeschützten Formmassen besitzen eine gute Wärmebeständigkeit und Stoßfestigkeit. US 2006/0118989 beschreibt ein Verfahren zum Extrudieren von Polymerzusammensetzungen.

Ebenfalls mit Blähgraphit, einer Phosphorverbindung und einem fluorierten Polymer flammgeschützte thermoplastische Formmassen werden offenbart in den Europäischen Patentanmeldungen EP 07112183.4 (Aktenzeichen) und EP 07116636.7 (Aktenzeichen), wobei es sich bei den Polymerkomponenten der erstgenannten Schrift um Acrylnitril-Butadien-Styrol-Copolymere (ABS) und Acrylat-Styrol-Acrylnitril-Copolymere (ASA) handelt, bei denen der zweitgenannten Schrift um PS und HIPS.

Oftmals ist es schwierig, bei thermoplastischen Formmassen, die mit expandierbarem Graphit flammhemmend ausgerüstet sind, einerseits eine ausreichende Flammhemmung zu erreichen, andererseits aber dennoch ausreichend gute mechanische Eigenschaften beizubehalten.

Aufgabe der vorliegenden Erfindung war es daher, mit expandierbarem Graphit ausgerüstete thermoplastische Formmassen bereit zu stellen, die gegenüber bekannten Formmassen eine verbesserte Kombination aus flammhemmenden und mechanischen Eigenschaften aufweisen.

Demgemäß wurden die eingangs definierten Verfahren gefunden, wobei erfindungswesentlich ist, daß die Dosierung des expandierbaren Graphits B1) in den Schneckenextruder an einer Stelle erfolgt, hinter der - in Förderrichtung betrachtet - die Extruderschnecke im wesentlichen keine Scherelemente umfaßt.

Die gemäß den erfindungsgemäßen Verfahren hergestellten thermoplastischen Formmassen enthaltend expandierbaren Graphit weisen gegenüber bekannten Formmassen eine verbesserte Kombination aus flammhemmenden und mechanischen Eigenschaften auf.

Die erfindungsgemäßen Verfahren sowie die weiteren erfindungsgemäßen Gegenstände werden im folgenden beschrieben.

Die nach den erfindungsgemäßen Verfahren herstellbaren thermoplastischen Formmassen enthalten

A) 39 bis 99 Gew.-%, bevorzugt 50 bis 95 Gew.-%, besonders bevorzugt 65 bis 90 Gew.-%, Komponente A,
B) 1 bis 60 Gew.-%, bevorzugt 5 bis 40 Gew.-%, besonders bevorzugt 10 bis 35 Gew.-%, Komponente B, und
C) 0 bis 60 Gew.-%, bevorzugt 0 bis 45 Gew.-%, besonders bevorzugt 0 bis 25 Gew.-% Komponente C,

wobei die Gewichtsprozente jeweils auf das Gesamtgewicht der Komponenten A) bis C) bezogen sind und zusammen

100 Gew.-% ergeben.

Die Flammschutzmittelkomponente B) kann grundsätzlich ausschließlich aus Komponente B1), dem expandierbaren Graphit, bestehen. In einer bevorzugten Ausführungsform der Erfindung umfasst die Flammschutzmittelkomponente B) außer dem expandierbaren Graphit jedoch weitere Komponenten, insbesondere die im folgenden noch beschriebenen Komponenten B2) und B3).

Die Flammschutzmittelkomponente B) umfaßt in diesem Fall insbesondere

B1) 20 bis 79,99 Gew.-%, bevorzugt 30 bis 69,9 Gew.-%, besonders bevorzugt 40 bis 59,5 Gew.-%, der Komponente B1),
B2) 20 bis 79,99 Gew.-%, bevorzugt 30 bis 69,9 Gew.-%, besonders bevorzugt 40 bis 59,5 Gew.-%, der Komponente B2) und
B3) 0,01 bis 4 Gew.-%, bevorzugt 0,1 bis 3 Gew.-%, besonders bevorzugt 0,5 bis 2 Gew.-%, der Komponente B3),

wobei die Gewichtsprozente jeweils auf das Gesamtgewicht der Komponenten B1) bis B3) bezogen sind und zusammen 100 Gew.-% ergeben.

<u>Komponente A)</u>:

Als Komponente A) der thermoplastischen Formmassen sind grundsätzlich alle dem Fachmann bekannten und in der Literatur beschriebenen thermoplastischen Polymere geeignet.

Geeignet als Komponente A) sind z.B.

- Polyolefine wie Polyethylen und Polypropylen,
- Polyvinylchlorid,
- Styrolpolymere wie Polystyrol (schlagfest oder nicht schlagfest modifiziert),
- schlagzähmodifizierte vinylaromatische Copolymere wie ABS (Acrylnitril-Butadien-Styrol), ASA (Acrylnitril-Styrol-Acrylat) und MABS (transparentes ABS, enthaltend Methacrylat-Einheiten),
- Styrol-Butadien-Blockcopolymere ("SBC"), insbesondere thermoplastische Elastomere auf Basis von Styrol ("S-TPE"),
- Polyamide,
- Polyester wie Polyethylenterephthalat (PET), Polyethylenterephthalat-Glycol (PETG) und Polybutylenterephthalat (PBT),
- Polycarbonat (z.B. Makrolon® der Bayer AG), Polymethylmethacrylat (PMMA),
- Poly(ether)sulfone und
- Polyphenylenoxid (PPO).

Bevorzugt als Komponente A) sind ein oder mehrere Polymere ausgewählt aus der Gruppe ASA, ABS, Polyamide und Polyester einsetzbar.

Bevorzugte schlagzäh modifizierte vinylaromatische Copolymere sind schlagzäh modifizierte Copolymerisate aus vinylaromatischen Monomeren und Vinylcyaniden (SAN). Bevorzugt werden als schlagzähmodifiziertes SAN ASA-Polymerisate und/oder ABS-Polymerisate eingesetzt, sowie (Meth)acrylat-Acrylnitril-Butadien-Styrol-Polymerisate ("MABS", transparentes ABS), aber auch Blends von SAN, ABS, ASA und MABS mit anderen Thermoplasten wie Polycarbonat, Polyamid, Polyethylenterephthalat, Polybutylenterephthalat, PVC, Polyolefinen.

Unter ASA-Polymerisaten werden im allgemeinen schlagzähmodifizierte SAN-Polymerisate verstanden, bei denen kautschukelastische Pfropfcopolymerisate von vinylaromatischen Verbindungen, insbesondere Styrol, und Vinylcyaniden, insbesondere Acrylnitril, auf Polyalkylacrylatkautschuken in einer Copolymermatrix aus insbesondere Styrol und/oder $\alpha$-Methylstyrol und Acrylnitril vorliegen.

Unter ABS-Polymerisaten werden im allgemeinen schlagzähmodifizierte SAN-Polymerisate verstanden, bei denen Dien-Polymerisate, insbesondere 1,3-Polybutadien, in einer Copolymermatrix aus insbesondere Styrol und/oder $\alpha$-Methylstyrol und Acrylnitril vorliegen.

Als Komponente A) geeignet sind grundsätzlich alle dem Fachmann bekannten und in der Literatur beschriebenen SBC. Bevorzugt eingesetzt werden S-TPE, insbesondere solche mit einer Reißdehnung von mehr als 300 %, besonders bevorzugt mehr als 500 %, insbesondere von mehr als 500% bis 600 % (diese und alle anderen in dieser Anmeldung genannten Reißdehnungen und Zugfestigkeiten werden bestimmt im Zugversuch entsprechend ISO 527-2: 1996 an Probekörpern vom Typ 1 BA (Anhang A der genannten Norm: "kleine Probekörper")).

Besonders bevorzugt mischt man als SBC oder S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung $(S/B)_{random}$ oder einem Styrolgradienten $(S/B)_{taper}$ zu (z.B. Styrolux® oder insbesondere

Styroflex® der BASF Aktiengesellschaft, K-Resin® der CPC; weitere Komponenten C) werden vertrieben unter den Marken Cariflex®, Kraton®, Tufprene®, A-saflex®).

Der Gesamtbutadiengehalt der SBC liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew.-%.

Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken $(S/B)_{random}$. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 - 16 %. Die ungesättigten Anteile, insbesondere solche, die sich von Butadien ableiten, der als Komponente A) einsetzbaren S-TPE und SBC können auch ganz oder teilweise hydriert sein. Bei (teil)hydrierten SBC kann der Anteil an 1,2-Verknüpfungen der Dieneinheit vor dem Hydrierschritt auch bis zu 60 % sein.

Als Komponente A) eignen sich beispielsweise teilkristalline Polyolefine, wie Homo- oder Copolymerisate von Ethylen, Propylen, Buten-1, Penten-1, Hexen-1, 4-Methylpenten-1 sowie Ethylencopolymerisate mit Vinylacetat, Vinylalkohol, Ethylacrylat, Butylacrylat oder Methacrylat. Bevorzugt wird als Komponente A ein High-Density-Polyethylen (HDPE), Low-Density-Polyethylen (LDPE), Linear-Low-Density-Polyethylen (LLDPE), Polypropylen (PP), Ethylen-Vinylacetat-Copolymerisat (EVA) oder Ethylen-Acryl-Copolymerisat eingesetzt. Eine insbesondere bevorzugte Komponente A) ist Polypropylen.

Die als Komponente A) geeigneten Polycarbonate haben vorzugsweise ein Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Besonders gut als Komponente A geeignete Polycarbonate sind solche, die Einheiten enthalten, welche sich von Resorcinol- oder Alkylresorcinolestern ableiten, wie sie beispielsweise in WO 00/61664, WO 00/15718 oder WO 00/26274 beschrieben werden; solche Polycarbonate werden beispielsweise von General Electric Company unter der Marke SollX® vertrieben.

Es können auch Copolycarbonate gemäß der US-A 3 737 409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_w$, bestimmt mittels Gelpermeationschromatographie in Tetrahydrofuran gegen Polystyrolstandards) der Polycarbonate liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate relative Lösungsviskositäten im Bereich von 1,1 bis 1,3, gemessen in 0,5 gew.-%iger Lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr als 0,04.

Die Polycarbonate können sowohl als Mahlgut als auch in granulierter Form eingesetzt werden.

Generell ist als Komponente A) jedes aromatische oder aliphatische thermoplastische Polyurethan geeignet, bevorzugt sind amorphe aliphatische thermoplastische Polyurethane geeignet, die transparent sind. Aliphatische thermoplastische Polyurethane und deren Herstellung sind dem Fachmann bekannt, beispielsweise aus EP-B1 567 883

oder DE-A 10321081, und kommerziell verfügbar, beispielsweise unter den Marken Texin® und Desmopan® der Bayer Aktiengesellschaft.

Komponente B):

Die nach den erfindungsgemäßen Verfahren herstellbaren thermoplastischen Formmassen enthalten als Komponente B) eine Flammschutzmittelmischung umfassend expandierbaren Graphit B1).

In einer bevorzugten Ausführungsform der Erfindung umfassen die nach den erfindungsgemäßen Verfahren herstellbaren thermoplastischen Formmassen

B1) expandierbaren Graphit,
B2) eine Phosphor enthaltende Flammschutzverbindung und
B3) ein fluorhaltiges Polymer.

Die nach den erfindungsgemäßen Verfahren herstellbaren Formmassen enthalten als Komponente B1) dem Fachmann bekannten und in der Literatur beschriebenen expandierbaren Graphit, sogenannten Blähgraphit (wärme- bzw. hitzeexpandierbarer Graphit). Dieser leitet sich in der Regel von natürlichem oder künstlichem Graphit ab.

Der Blähgraphit ist beispielsweise erhältlich durch Oxidation von natürlichem und/oder künstlichem Graphit. Als Oxidationsagentien können $H_2O_2$ oder Salpetersäure in Schwefelsäure eingesetzt werden.

Weiterhin kann der Blähgraphit durch Reduktion, z.B. mit Natriumnaphthalenid in einem aprotischen organischen Lösungsmittel hergestellt werden.

Aufgrund seiner Schichtgitterstruktur ist Graphit in der Lage, spezielle Formen von Einlagerungsverbindungen zu bilden. In diesen so genannten Zwischengitterverbindungen sind Fremdatome oder -moleküle in z.T. stöchiometrischen Verhältnissen in die Räume zwischen den Kohlenstoffatomen aufgenommen worden.

Die Oberfläche des Blähgraphits kann zur besseren Verträglichkeit ggü. der Thermoplastmatrix mit einem Beschichtungsmittel beschichtet sein, beispielsweise mit dem Fachmann bekannten Silanschlichten.

Für den Fall, dass der Blähgraphit durch o.g. Oxidation erhalten wurde, kann es notwendig sein, eine alkalische Verbindung zuzusetzen, da der Blähgraphit (durch die enthaltende Säure) ansonsten Korrosion der Formmassen und/oder Lager- und Herstellapparate derartiger Formmassen verursachen kann. Insbesondere Alkaliverbindungen sowie $Mg(OH)_2$ oder Al-Hydroxide können in Mengen bis zu 10, vorzugsweise bis zu 5 Gew.-% (bezogen auf 100 Gew.-% B1) zugegeben werden. Vorteilhaft erfolgt die Mischung bevor die Komponenten compoundiert werden.

Vorzugsweise beträgt die Hitze-Ausdehnung des Blähgraphits bei schnellem Aufheizen von Raumtemperatur auf 800°C (in Richtung der c-Achse des Kristalls) mindestens 100 ml/g, vorzugsweise mindestens 110 ml/g (sog. spezifische Volumenänderung).

Wesentlich für die Eignung als Flammschutzmittel ist es, dass der Blähgraphit sich nicht in größerem Ausmaß ausdehnt bei Temperaturen unter 270°C, bevorzugt unter 280°C. Darunter versteht der Fachmann, dass der Blähgraphits bei den genannten Temperaturen in einem Zeitraum von 10 min eine Volumenexpansion von weniger als 20 % erfährt.

Der Ausdehnungskoeffizient (als spezifische Kerngröße) bedeutet in der Regel die Differenz zwischen dem spezifischen Volumen (ml/g) nach Erhitzen und dem spezifischen Volumen bei 20°C Raumtemperatur. Dies wird allgemein gemessen nach folgender Vorschrift: Ein Quarzbehälter wird auf 1000°C in einem elektrischen Schmelzeofen erhitzt. 2 g des Blähgraphits werden schnell in den Quarzbehälter gegeben und dieser 10 sec. im Schmelzeofen belassen.

Das Gewicht von 100 ml des expandierten Graphits wird gemessen, um die sog. "loosened apparent specific gravity" zu bestimmen. Der Kehrwert bildet dann das spezifische Volumen bei dieser Temperatur. Das spezifische Volumen bei Raumtemperatur wird entsprechend bei 20°C gemessen. (Ausdehnungskoeffizient = spez. Volumen nach Erhitzen - spezifisches Volumen bei 20°C).

Die mittlere Teilchengröße $D_{50}$ des Blähgraphits (bestimmt aus der integralen Volumenverteilung als Volumenmittel der Teilchengrößen, wie sie mittels Laserlichtbeugung an einem Malvern-Mastersizer 2000 am Trockenpulver ermittelt werden; die Laserlichtbeugung liefert die integrale Verteilung des Teilchendurchmessers einer Probe; hieraus läßt sich entnehmen, wieviel Prozent der Teilchen einen Durchmesser gleich oder kleiner einer bestimmten Größe haben; der mittlere Teilchendurchmesser, der auch als $D_{50}$-Wert der integralen Volumenverteilung bezeichnet wird, ist dabei als der Teilchendurchmesser definiert, bei dem 50 Gew.-% der Teilchen einen kleineren Durchmesser haben als der Durchmesser, der dem $D_{50}$-Wert entspricht; ebenso haben dann 50 Gew.% der Teilchen einen größeren Durchmesser als der $D_{50}$-Wert) liegt vor der Schmelzevermischung im Schneckenextruder vorzugsweise zwischen 10 μm und 1000 μm, bevorzugt zwischen 30 μm und 850 μm, insbesondere bevorzugt zwischen 200 μm und 700 μm. Sind die mittleren Teilchengrößen niedriger, wird in der Regel keine ausreichende Flammschutzwirkung erzielt; sind sie größer, werden üblicherweise die mechanischen Eigenschaften der thermoplastischen Formmassen nachteilig beeinflußt.

Die Dichte des Blähgraphits liegt üblicherweise im Bereich von 0,4 bis 2 $g/cm^3$.

Bei den phosphorhaltigen Verbindungen der Komponente B2) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von als Komponente B2) geeigneten phosphorhaltigen Verbindungen, insbesondere den anorganischen oder organischen Phosphaten, Phosphiten, Phosphonaten, Phosphatestern, rotem Phosphor und Triphenylphosphinoxid, seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin und Trisnonylphenylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab.

Geeignet sind Phosphinoxide der allgemeinen Formel I

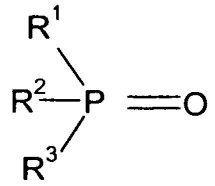

I

wobei $R^1$, $R^2$ und $R^3$ in Formel I gleiche oder verschiedene Alkyl-, Aryl-, Alkylaryl- oder Cycloalkylgruppen mit 8 bis 40 C-Atomen bedeuten.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Bevorzugt sind weiterhin oxidierte Umsetzungsprodukte aus Phosphin mit Aldehyden, insbesondere aus t-Butylphosphin mit Glyoxal. Besonders bevorzugt eingesetzt werden Triphenylphosphinoxid, Tricyclohexlyphosphinoxid, Tris-(n-octyl)-phosphinoxid und Tris-(cyanoethyl)-phosphinoxid, insbesondere Triphenylphosphinoxid.

Ebenso geeignet ist Triphenylphosphinsulfid und dessen wie oben beschriebene Derivate der Phosphinoxide.

Phosphor der Wertigkeitsstufe $\pm 0$ ist der elementare Phosphor. In Frage kommen roter und schwarzer Phosphor. Bevorzugt ist roter Phosphor.

Phosphorverbindungen der "Oxidationsstufe" +1 sind z.B. Hypophosphite rein organischer Natur, z.B. organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)-ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäure-derivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten wie z.B. Verbindungen gemäß Formel II

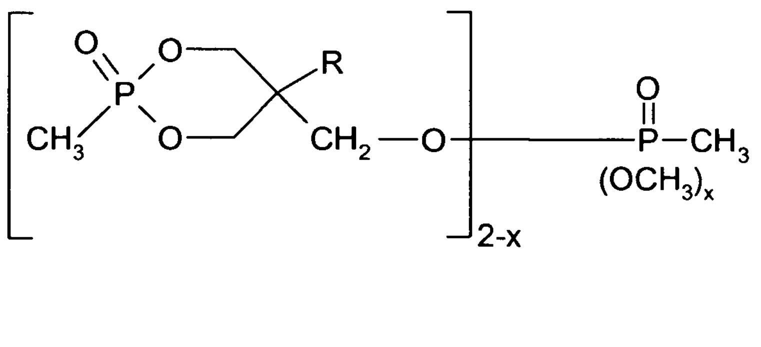

(II)

wobei R einen $C_1$ bis $C_4$-Alkylrest, bevorzugt Methylrest, x=0 oder 1 bedeutet (Amgard® P 45 der Firma Albright & Wilson).

Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl) phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat und Resorcinol-bis-(diphenylphosphat) und dessen kernsubstituierten Derivate der allgemeinen Formel III (RDP):

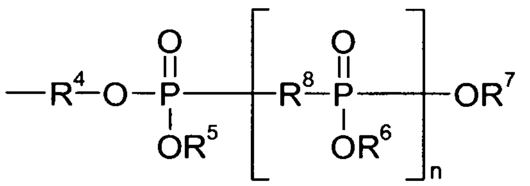

III

in der die Substituenten in Formel III folgende Bedeutung haben:

$R^4$-$R^7$ ein aromatischer Rest mit 6 bis 20 C-Atomen, bevorzugt ein Phenylrest, welcher mit Alkylgruppen mit 1 bis 4 C-Atomen bevorzugt Methyl, substituiert sein kann,

$R^8$ ein zweiwertiger Phenolrest, bevorzugt

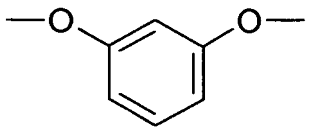

oder

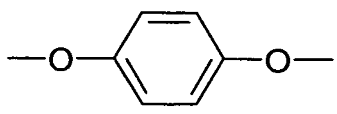

und n einen Durchschnittswert zwischen 0,1 bis 100, bevorzugt 0,5 bis 50, insbesondere 0,8 bis 10 und ganz besonders 1 bis 5.

Die im Handel erhältlichen RPD-Produkte unter dem Warenzeichen Fyroflex® oder Fyrol®-RDP (Akzo) sowie CR 733-S (Daihachi) sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie beispielsweise in der De-A 20 36 173 beschrieben ist. Das Molekulargewicht gemessen durch Dampfdruckosmometrie in Dimethylformamid, der Polyphospholinoxide soll im Bereich von 500 bis 7000, vorzugsweise im Bereich von 700 bis 2000 liegen.

Das Phosphor besitzt hierbei die Oxidationsstufe -1.

Ferner können anorganische Koordinationspolymere von Aryl(alkyl)-phosphinsäuren wie z.B. Poly-β-natrium (I)-methylphenylphosphinat eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbiphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragene Marke der Firma Mobil Oil), verwendet werden (s. Formeln IV und V):

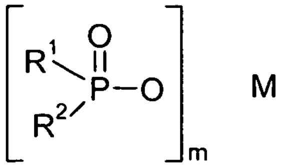

IV

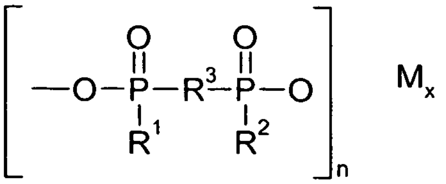

V

wobei die Substituenten in den Formeln IV und V folgende Bedeutung haben:

$R^1$, $R^2$ Wasserstoff, $C_1$- bis $C_6$-Alkyl, der gegebenenfalls eine Hydroxylgruppe enthält, vorzugsweise $C_1$- bis $C_4$-Alkyl, linear oder verzweigt, z.B. Methyl, Ethyl, n-Propyl, iso-Propyl, n-Butyl, tert.-Butyl, n-Pentyl; Phenyl; wobei bevorzugt mindestens ein Rest $R^1$ oder $R^2$, insbesondere $R^1$ und $R^2$ Wasserstoff ist;

$R^3$ $C_1$- bis $C_{10}$-Alkylen, linear oder verzweigt, z.B. Methylen, Ethylen, n-Propylen, iso-Propylen, n-Butylen, tert.-Butylen, n-Pentylen, n-Octylen, n-Dodecylen;
Arylen, z.B. Phenylen, Naphthylen;
Alkylarylen, z.B. Methyl-phenylen, Ethyl-phenylen, tert.-Butyl-phenylen, Methyl-naphthylen, Ethyl-naphthylen, tert.-Butyl-naphthylen;
Arylalkylen, z.B. Phenyl-methylen, Phenyl-ethylen, Phenyl-propylen, Phenylbutylen;

M ein Erdalkali-, Alkalimetall, Al, Zn, Fe, Bor;

m eine ganze Zahl von 1 bis 3;

n eine ganze Zahl von 1 und 3 und

x 1 oder 2.

Besonders bevorzugt sind Verbindungen der Formel IV, in denen $R^1$ und $R^2$ Wasserstoff ist, wobei M vorzugsweise Ca, Zn oder Al ist und Calciumphosphinat als Verbindung ganz besonders bevorzugt ist.

Derartige Produkte sind im Handel z.B. als Calciumphosphinat erhältlich.

Geeignete Salze der Formel IV oder V, in denen nur ein Rest $R^1$ oder $R^2$ Wasserstoff bedeutet, sind z.B. Salze der Phenylphosphinsäure, wobei deren Na- und/oder Ca-Salze bevorzugt sind.

Weiterhin bevorzugte Salze weisen einen hydroxylgruppenhaltigen Alkylrest $R^1$ und/oder $R^2$ auf. Diese sind beispielsweise durch Hydroxymethylierung erhältlich. Bevorzugte Verbindungen sind Ca, Zn und Al-Salze.

Die mittlere Teilchengröße $D_{50}$ der Komponente B2) (bestimmt wie bei der mittleren Teilchengröße $D_{50}$ des expandierbaren Graphits B1) beschrieben) ist vorzugsweise kleiner 10 $\mu$m, vorzugsweise kleiner 7 $\mu$m und insbesondere kleiner 5 $\mu$m.
Der $D_{10}$-Wert ist vorzugsweise kleiner 4 $\mu$m, insbesondere 3 $\mu$m und ganz besonders bevorzugt kleiner 2 $\mu$m.
Bevorzugte $d_{90}$-Werte sind kleiner 40 $\mu$m und insbesondere kleiner 30 $\mu$m und ganz besonders bevorzugt kleiner 20 $\mu$m.

Weiterhin bevorzugt sind Phosphorverbindungen der allgemeinen Formel VI:

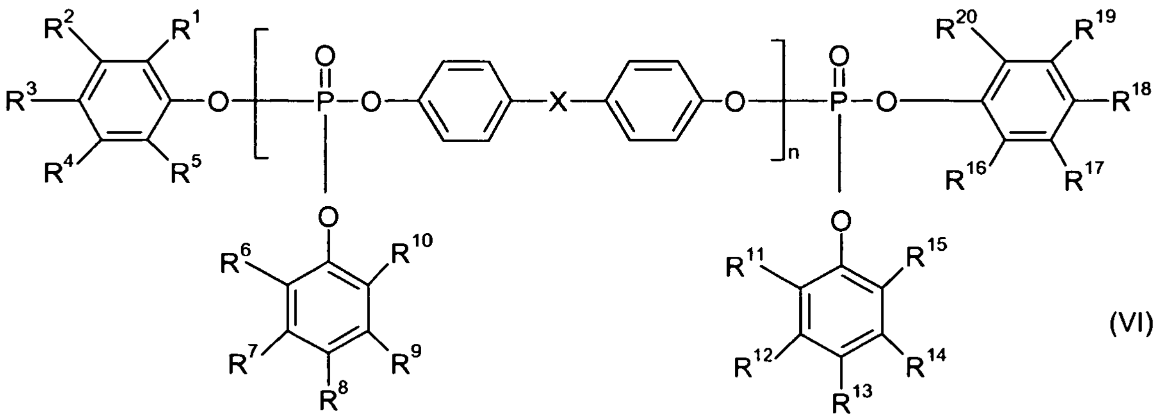

(VI)

wobei die Substituenten in Formel VI folgende Bedeutung haben:

| | |
|---|---|
| $R^1$ bis $R^{20}$ | unabhängig voneinander Wasserstoff, eine lineare oder verzweigte Alkylgruppe bis zu 6 C-Atomen |
| n | einen Durchschnittswert von 0,5 bis 50 und |
| X | eine Einfachbindung, C=O, S, $SO_2$, $C(CH_3)_2$ |

Bevorzugte Verbindungen B2) sind solche der Formel VI, in denen $R^1$ bis $R^{20}$ unabhängig voneinander Wasserstoff und/oder einen Methylrest bedeuten. Für den Fall, daß $R^1$ bis $R^{20}$ unabhängig voneinander einen Methylrest bedeuten, sind solche Verbindungen bevorzugt, in welchen die Reste $R^1$, $R^5$, $R^6$, $R^{10}$, $R^{11}$, $R^{15}$, $R^{16}$, $R^{20}$ in ortho Stellung zum Sauerstoff der Phosphatgruppe mindestens einen Methylrest darstellen. Weiterhin bevorzugt sind Verbindungen B2) in denen pro aromatischem Ring eine Methylgruppe, vorzugsweise in ortho-Stellung vorhanden ist und die anderen Reste Wasserstoff bedeuten.

Insbesondere bevorzugt sind als Substituenten $SO_2$ und S, sowie ganz besonders bevorzugt $C(CH_3)_2$ für X in obiger Formel (VI).

n beträgt in obiger Formel (VI) vorzugsweise als Durchschnittswert 0,5 bis 5, insbesondere 0,7 bis 2 und insbesondere $\approx 1$.

Die Angabe von n als Durchschnittswert ergibt sich durch das Herstellverfahren der oben aufgeführten Verbindungen, so daß der Oligomerisierungsgrad meist kleiner 10 beträgt und geringe Anteile (meist < 5 Gew.-%) an Triphenylphosphat enthalten sind, wobei dies von Charge zu Charge unterschiedlich ist. Solche Verbindungen B2) sind als CR - 741 der Firma Daihachi im Handel erhältlich.

Als Komponente B3) enthalten die Formmassen ein fluorhaltiges Polymer. Bevorzugt sind fluorhaltige Ethylenpolymerisate. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine mittlere Teilchengröße $D_{50}$ im Bereich von 0,05 bis 10 $\mu$m, insbesondere von 0,1 bis 5 $\mu$m auf. Diese geringen Teilchengrößen lassen sich besonders bevorzugt durch Verwendung von wässrigen Dispersionen von fluorhaltigen Ethylenpolymerisaten und deren Einarbeitung in eine Polymerschmelze erzielen.

<u>Komponente C):</u>

Die nach den erfindungsgemäßen Verfahren herstellbaren thermoplastischen Formmassen können ein oder mehrere - von den Komponenten A) und B) verschiedene - Zusatzstoffe als Komponente C) enthalten. Geeignet sind grundsätzlich alle dem Fachmann bekannten und in der Literatur beschriebenen kunststoffüblichen Zusatzstoffe. Kunststoffübliche Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe

und Pigmente und Weichmacher sowie Fasern, beispielsweise Glasfasern oder Kohlenstofffasern.

Oxidationsverzögerer und Wärmestabilisatoren, die der thermoplastischen Formmasse gemäß der Erfindung zugesetzt werden können, sind z. B. Halogenide von Metallen der Gruppe I des Periodensystems, z. B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der thermoplastischen Formmassen, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der thermoplastischen Formmassen, eingesetzt werden.

Gleit- und Entformungsmittel, die in der Regel in Mengen bis zu 1 Gew.-%, bezogen auf das Gewicht der thermoplastischen Formmassen, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet sind insbesondere Zink-, Magnesium- und Calciumstearat sowie N,N'-Ethylen-bis-stearamid.

Als Glasfasern können in den erfindungsgemäßen Formmassen alle dem Fachmann bekannten und in der Literatur beschriebenen Glasfasern eingesetzt werden (siehe beispielsweise Milewski, J.V., Katz, H.S. "Handbook of Reinforcements for Plastics", S. 233 ff., Van Nostrand Reinholt Company Inc, 1987).

<u>Herstellverfahren:</u>

Die thermoplastischen Formmassen werden durch Schmelzevermischung der Komponenten A), B) und, falls vorhanden, C) in einem Schneckenextruder hergestellt, wobei der Schneckenextruder entlang der Förderrichtung in dieser Reihenfolge mindestens eine Dosierzone, eine Plastifizierzone, eine Homogenisierzone und eine Austragszone umfaßt.

Geeignete Schneckenextruder sind beispielsweise in Saechtling, Kunststoff-Taschenbuch, Hanser Verlag, München, Wien, Ausgabe 26, 1995, Seiten 191 bis 246, beschrieben.

Schneckenextruder weisen üblicherweise Abschnitte unterschiedlicher Funktion, sogenannte "Zonen" auf. Die unterschiedlichen Zonen der Schneckenextruder sind nicht notwendigerweise identisch mit den einzelnen Bauteilen wie Gehäuseteilen oder Schneckensegmenten, aus denen die Schneckenextruder montiert sind. Eine Zone besteht in der Regel aus mehreren Bauteilen. Die einzelnen Zonen können je nach Funktion unterschiedliche räumliche Ausdehnungen, beispielsweise unterschiedliche Längen oder Volumina, haben.

Üblicherweise weisen Schneckenextruder eine oder mehrere der im folgenden beschriebenen Zonen auf. Darüberhinaus können Schneckenextruder aber auch Zonen aufweisen, deren Funktion im folgenden nicht explizit beschrieben wird.

Unter Dosierzone ist der Abschnitt eines Schneckenextruders zu verstehen, in dem eine oder mehrere Komponenten, beispielsweise ein thermoplastisch verarbeitbares Polymer, dem Schneckenextruder zugeführt werden. Diese Zuführung kann mit einer Dosiereinrichtung erfolgen, die beispielsweise aus einer obenliegenden Öffnung in dem Schneckenextruder mit aufgesetztem Trichter besteht, so daß die zu dosierende Komponente durch Schwerkraft in den Schneckenextruder gelangt. Die Dosiereinrichtung kann aber auch beispielsweise aus einer Förderschnecke oder einem Extruder bestehen, durch die die zu dosierende Komponente durch die Dosieröffnung des Schneckenextruders gedrückt wird.

Unter Plastifizierzone (oftmals auch als Aufschmelzzone bezeichnet) ist der Abschnitt eines Schneckenextruders zu verstehen, in dem eine Komponente, insbesondere Komponente A), in einen warmformbaren, meist schmelzflüssigen oder plastisch verformbaren, Zustand gebracht wird. In der Regel wird dies durch Beheizen oder mechanisch eingebrachte Energie erreicht. Zum Einbringen mechanischer Energie kommen als Plastifizierungselemente die dem Fachmann geläufigen Bauteile in Betracht, beispielsweise Schneckenelemente mit geringer Steigung in Förderrichtung, Knetblöcke mit schmalen oder breiten, fördernden oder nichtfördernden Knetscheiben, Schneckenelemente mit einer Steigung entgegen der Förderrichtung, oder eine Kombination solcher Elemente. Die Auswahl der Plastifizierungselemente in der Plastifizierzone richtet sich hinsichtlich ihrer Art, Anzahl und Dimensionierung nach den Komponenten der thermoplastischen Formmassen, insbesondere nach der Viskosität und Erweichungstemperatur sowie der Mischbarkeit der Komponenten.

Unter Homogenisierzone ist der Abschnitt eines Schneckenextruders zu verstehen, in dem eine oder mehrere Komponenten, von denen mindestens eine im warmformbaren Zustand ist, homogenisiert werden. Diese Homogenisierung erfolgt meist durch Mischen, Kneten oder Scheren. Geeignete Misch-, Knet- und Scherelemente sind beispielsweise die bereits als Plastifizierungselemente beschriebenen Mittel.

Darüber hinaus sind geeignete Homogenisierelemente Kombinationen von fördernden, nichtfördenden und rückfördernden Knetblöcken, die aus schmalen oder breiten Knetscheiben oder deren Kombinationen bestehen können. Ebenso geeignete Homogenisierelemente sind sogenannte Zahnscheiben, die auch mit fördernden oder nicht fördernd angestellten Zähnen ausgerüstet sein können, oder sogenannte Zahnmischelemente, bei denen beispielsweise der Gewindegang nicht durchgehend ist, sondern aus einer Reihe von Zähnen besteht; auch diese Zahnmischelemente können fördernd oder nichtfördernd ausgerüstet sein. Weitere, dem Fachmann bekannte Homogenisierelemente sind sogenannte SMEs, Schnecken mit durchbrochenen Gängen, Blisterscheiben, und diverse Arten von Sonderelementen, die von unterschiedlichen Extruderherstellern kommerziell angeboten werden.

Unter Austragszone ist der Abschnitt eines Schneckenextruders zu verstehen, in dem der Austrag der thermoplastisch verarbeitbaren Formmasse aus dem Schneckenextruder vorbereitet und durch die Austrittsöffnung durchgeführt wird. Die Austragszone besteht meist aus einer Förderschnecke und einem geschlossenen Gehäuseteil, das mit einer definierten Austrittsöffnung abgeschlossen ist.

Bevorzugt wird als Austrittsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

Sofern die thermoplastisch verarbeitbare Formmasse nicht erst als Granulat erhalten, sondern direkt weiterverwendet werden soll, ist auch die Weiterverarbeitung im heißen Zustand oder die Direktextrusion von Platten, Folien, Rohren und Profilen vorteilhaft.

Ein Schneckenextruder kann darüberhinaus weitere Zonen enthalten, beispielsweise Entlüftungs- oder Entgasungszonen zum Abführen gasförmiger Bestandteile oder Abquetsch- und Entwässerungszonen zum Abtrennen und Austragen flüssiger Bestandteil, bei denen es sich um Wasser, aber auch um andere Stoffe handeln kann. Entgasungs-, Abquetsch- und Entwässerungszonen sowie deren apparative Ausführung und Anordnung sind in WO 98/13412 beschrieben, weshalb bezüglich dieser Merkmale ausdrücklich auf die genannte Schrift verwiesen wird.

Ein Abschnitt eines Schneckenextruders kann auch zwei oder mehr der genannten Zonen vereinigen. Wird beispielsweise in die Homogenisierzone eines Extruders ein weiterer Stoff zudosiert, so fungiert die Homogenisierzone gleichzeitig als Dosierzone. In analoger Weise können die anderen der genannten Zonen in einem Abschnitt der Schneckenextruder gleichzeitig realisiert sein.

Die einzelnen Zonen können räumlich voneinander klar abgrenzbar sein oder kontinuierlich ineinander übergehen. So ist beispielsweise bei einem Extruder der Übergang von der Plastifizierzone in die Homogenisierzone räumlich nicht immer klar abgrenzbar. Es findet oftmals ein kontinuierlicher Übergang zwischen den beiden Zonen statt.

Wie allgemein bekannt ist, können die verschiedenen Zonen eines Schneckenextruders individuell geheizt oder gekühlt werden, um entlang der Förderrichtung ein optimales Temperaturprofil einzustellen. Geeignete Heiz- und Kühleinrichtungen sind dem Fachmann bekannt.

Die im Einzelfall zu wählenden Temperaturen und räumlichen Abmessungen der einzelnen Zonen unterscheiden sich in Abhängigkeit der chemischen und physikalischen Eigenschaften der Komponenten und deren Mengenverhältnissen. So liegen z.B. die Mischtemperaturen in der Homogenisierzone in der Regel zwischen 100°C und 400°C, bei Einsatz von ABS oder ASA als Komponente A) in der Regel bei 200 bis 280°C.

Wie bereits vorstehend beschrieben wird in den erfindungsgemäßen Verfahren der Schmelzevermischung ein Schneckenextruder eingesetzt, der entlang der Förderrichtung in dieser Reihenfolge mindestens eine Dosierzone, eine Plastifizierzone, eine Homogenisierzone und eine Austragszone umfaßt.

In einer Ausführungsform der Erfindung können sämtliche Komponenten der thermoplastischen Formmassen -ausgenommen der wesentlichen Menge der Komponente B1)- zeitgleich, entweder räumlich getrennt voneinander oder gemeinsam, der Dosierzone des Schneckenextruders zugeführt werden. Es ist auch möglich, daß einzelne Komponenten der thermoplastischen Formmassen -ausgenommen der wesentlichen Menge der Komponente B1)- vorgemischt und der Dosierzone zugeführt werden, und dann die restlichen Komponenten einzeln und/oder ebenfalls gemischt in Förderrichtung gesehen hinter dieser Dosierzone hinzugegeben werden.

Erfindungswesentlich ist, daß die Dosierung der Hauptmenge, bevorzugt der gesamten Menge, des expandierbaren Graphits B1) in den Schneckenextruder an einer Stelle erfolgt, hinter der - in Förderrichtung betrachtet - die Extruderschnecke keine Scherelemente umfaßt. Bevorzugt umfaßt die Extruderschnecke hinter der Dosierstelle nur noch Schneckenelemente, die eine im wesentlichen fördernde Wirkung auf das Extrusionsgut haben.

Grundsätzlich kann die Dosierung des expandierbaren Graphits B1) in den Schneckenextruder somit auch schon in der Dosierzone oder der Plastifizierzone erfolgen, sofern die Extruderschnecke von dieser Zugabestelle der Komponente B1) aus gesehen in Förderrichtung keine Scherelemente mehr umfaßt. Allerdings ist es bei dieser Ausführungsform der erfindungsgemäßen Verfahren schwierig, homogene Formmassen zu erhalten.

Vorteilhafterweise erfolgt die Dosierung des expandierbaren Graphits B1) in den Schneckenextruder daher in der Homogenisierzone (d.h., die Extruderschnecke kann in der Plastifizierzone mit Scherelementen ausgerüstet werden), besonders bevorzugt zwischen Homogenisierzone und Austragszone (d.h., die Extruderschnecke kann in der Plastifizierzone und/oder der Homogenisierzone mit Scherelementen ausgerüstet werden).

Der expandierbare Graphit B1) kann in reiner Form, aber auch in Mischung mit einer anderen Komponente, beispielsweise mit einem Teil der Komponente A) als sogenannter Additivbatch, zugeführt werden.

Das Merkmal, daß "die Extruderschnecke im keine Scherelemente umfaßt" bedeutet, daß die Extruderschnecke nur noch Elemente, beispielsweise Förderelemente, aufweist, die eine möglichst kleine Scherwirkung entfalten; Scherelemente, deren wesentliche Funktion dem Eintrag von Scherkräften in das Fördergut dient, sind nicht vorhanden.

Eine alternative Definition der erfindungsgemäßen Verfahren (bei der die mit Worten nur schwer widerzugebende Charakterisierung von Scherelementen und deren Funktion vermieden wird) besteht darin, daß die Herstellung der thermoplastischen Formmassen enthaltend die Komponenten A), B) und ggf. C) in den vorstehend beschriebenen Mengen ebenfalls durch Schmelzevermischung der Komponenten in einem Schneckenextruder erfolgt, wobei der Schneckenextruder wie vorstehend beschrieben entlang der Förderrichtung in dieser Reihenfolge mindestens eine Dosierzone, eine Plastifizierzone, eine Homogenisierzone und eine Austragszone umfaßt, wobei das erfindungswesentliche Merkmal ist, daß die Schneckenkonfiguration so gewählt wird, daß nach dem Austrag aus dem Schneckenextruder das Verhältnis aus dem flächengewichteten (Flächenmittel) und arithmetischen Mittelwert (Zahlenmittel) der Teilchengrößenverteilung (maximale Ausdehnung der Teilchen) $D_a/D_n$ des expandierbaren Graphits B1) in den thermoplastischen Formmassen im Bereich von 3,7 bis 6, bevorzugt im Bereich von 3,85 bis 5, besonders bevorzugt im Bereich von 4 bis 4,5, liegt und die mittlere Teilchengröße $D_a$ (Flächenmittel) des expandierbaren Graphits B1) in den thermoplastischen Formmassen im Bereich von 50 μm bis 1000 μm, bevorzugt im Bereich von 70 μm bis 500 μm, besonders bevorzugt im Bereich von 100 bis 300 μm liegt, wobei die Anzahl n und maximale Ausdehnung D aller Teilchen des expandierbaren Graphits (Komponente B1) in den thermoplastischen Formmassen nach Schmelzevermischung im Schneckenextruder anhand lichtmikroskopischer Untersuchungen von Dünnschnittaufnahmen, entnommen aus einer extrudierten Folie oder Platte mit Lichttransmissionsrichtung senkrecht zur Extrusionsrichtung und Schmalseite der Folie oder Platte durch Bildauswertung bestimmt wird. Die detaillierte Auswertemethode ist unter den Beispielen beschrieben. Aus der so bestimmten Anzahl n und maximalen Ausdehnung D aller Teilchen wurden die mittleren Teilchengröße $D_a$ (Flächenmittel) und $D_n$ (Zahlenmittel) anhand der folgenden Formeln ermittelt:

$$D_n = \frac{\Sigma_i\, n_i \cdot D_i}{\Sigma_i\, n_i} \qquad D_a = \frac{\Sigma_i\, n_i \cdot (D_i)^2}{\Sigma_i\, n_i \cdot D_i}$$

Als Schneckenextruder können Doppelschneckenextruder, die gleichsinnig drehend und ineinandergreifend, als auch gegenläufig kämmend sowie nicht kämmend sein können, verwendet werden. Besonders bevorzugt sind gleichsinnig drehende, kämmende Doppelschneckenextruder.

Es können Extruder mit Schnecken mit kleiner, mittlerer oder großer Gangtiefe (sog. "tiefgeschnittene Schnekken") verwendet werden. Die Gangtiefe der einzusetzenden Schnecken ist maschinentypabhängig. Der jeweils einzusetzende Maschinentyp richtet sich nach der jeweiligen Aufgabe.

Die Gangzahl der Schnecken des Extruders kann variieren. Bevorzugt werden zweigängige Schnecken verwendet. Jedoch können auch Schnecken mit anderen Gangzahlen, beispielsweise eingängige oder dreigängige, eingesetzt werden, oder solche Schnecken, die Abschnitte mit unterschiedlichen Gangzahlen aufweisen.

Die Schneckendrehzahlen des Extruders können innerhalb eines weiten Bereiches variieren. Bevorzugt werden relativ hohe Drehzahlen verwendet. Geeignete Drehzahlen liegen im Bereich von 50 bis 1200 $U/min^{-1}$, bevorzugt von 100 bis 1000 $U/min^{-1}$, besonders bevorzugt 200 bis 900 $U/min^{-1}$.

Die gemäß den erfindungsgemäßen Verfahren hergestellten thermoplastischen Formmassen enthaltend expandierbaren Graphit weisen gegenüber bekannten Formmassen eine verbesserte Kombination aus flammhemmenden und mechanischen Eigenschaften auf.

Die erfindungsgemäß hergestellten Formmassen eignen sich zur Herstellung von Fasern, Folien Formkörpern und Schäumen jeglicher Art. Fasern, Folien Formkörper und Schäume enthaltend die erfindungsgemäß hergestellten Formmassen sind beispielsweise einsetzbar als Haushaltsartikel, elektronische Bauteile, medizinische Geräte, Kfz-Bauteile und Baumaterialien.

Die Erfindung wird nachstehend anhand von Beispielen näher erläutert.

<u>Beispiele:</u>

<u>Meßmethoden:</u>

Mittlere Teilchengrößen $D_a$ [μm], $D_n$ [μm] und deren Verhältnis $D_a/D_n$ [dimensionslos] des expandierbaren Graphits (Komponente B1) in den thermoplastischen Formmassen nach Schmelzevermischung im Schneckenextruder:

Die Anzahl n und maximale Ausdehnung D aller Teilchen des expandierbaren Graphits (Komponente B1) in den thermoplastischen Formmassen nach Schmelzevermischung im Schneckenextruder wurde anhand lichtmikroskopischer Untersuchungen (Durchlicht-Hellfeld) bei 4-facher Primärvergrößerung (Endvergrößerung 74:1) von Dünnschnittaufnahmen zweier beliebiger, jeweils mindestens 1,7 mm x 1,3 mm großen Bereichen einer extrudierten Folie oder Platte (die Dünnschnitte wurden mit einem Leica-Mikrotom RM 2165 mit Diamantmesser entnommen) mit Lichttransmissionsrichtung senkrecht zur Extrusionsrichtung und Schmalseite der Folie oder Platte durch Bildauswertung bestimmt. Im Bild zusammenhängende Teilchen wurden durch manuelle Korrektur getrennt. Die Bildauswertung erfolgte anhand digitalisierter Bilder mit der analySIS-Software der Fa. Soft Imaging System GmbH.

Aus der so bestimmten Anzahl n und maximalen Ausdehnung D aller Teilchen wurden die mittleren Teilchengrößen $D_a$ (Flächenmittel) und $D_n$ (Zahlenmittel) anhand der folgenden Formeln ermittelt:

$$D_n = \frac{\Sigma_i n_i \cdot D_i}{\Sigma_i n_i} \qquad D_a = \frac{\Sigma_i n_i \cdot (D_i)^2}{\Sigma_i n_i \cdot D_i}$$

Kerbschlagzähigkeit $a_k$ [kJ/m$^2$]:

Die Kerbschlagzähigkeit $a_k$ wurde gemäß ISO 179 1 eA(F) bei 23°C bestimmt.

Nachbrennzeiten t1 und t2 [s]:

Im Brandtest in Anlehnung an UL 94, vertical burning standard, wurde an Stäben mit einer Dicke von 1,6 mm nach einer ersten Beflammungsdauer von 10 Sekunden die erste Nachbrennzeit t1 gemessen. Nach einer sich an das Verlöschen der Flammen anschließenden Wartezeit von 2 Sekunden und einer an diese Wartezeit anschließenden zweiten Beflammungsdauer von 10 Sekunden wurde die zweite Nachbrennzeit t2 gemessen.

<u>Einsatzstoffe</u>

Komponenten oder Versuche mit vorangestelltem "V-" sind nicht erfindungsgemäß und dienen zum Vergleich.

<u>Thermoplastisches Polymer, Komponente A):</u>

Als Komponenten A wurde eingesetzt:

a-I: ein handelsübliches Acrylnitril-Butadien-Styrol-Copolymer (ABS), Terluran® HI10 der BASF Aktiengesellschaft.
a-II: ein Styrol-Acrylnitril-Copolymer (SAN) enthaltend 34 Gew.-% Acrylnitril und 66 Gew.-% Styrol mit einer Viskositätszahl von 79 ml/g.

<u>Flammschutzmittelkomponente B):</u>

Als Komponente B1) wurde eingesetzt:

b1-I: Blähgraphit Nord-Min® 503 der Firma Nordmann, Rassmann, GmbH, enthaltend 8 Gew.-% Schwefelsäureeinlagerung, mit einer -vor der Schmelzevermischung im Schneckenextruder- mittleren Teilchengröße $D_{50}$ von 465 µm, einer freien Expansion (beginnend bei ca. 300°C) von mindestens 150 ml/g und einer Schüttdichte von 0,5 g/ml bei 20°C.

Als Komponente B2) wurde eingesetzt:

b2-I: Disflammol® TP, ein Triphenylphosphat der Lanxess Aktiengesellschaft.

Als Komponente B3) wurde eingesetzt:

b3-I: Polytetrafluorethylen PTFE TE-3893, Teflon® Dispersion der Fa. C. H. Erbslöh.

<u>Schneckenextruder SE:</u>

SE-I:

Es wurde ein Zweischneckenextruder ZSK 30 der Fa. Werner und Pfleiderer, bestehend aus 11 Gehäuseschüssen (die Zählung der Gehäuseschüsse beginnt bei 0, der Dosierzone, und setzt sich in Förderrichtung bis 10, der Austragszone, fort) und einem dazu gehörenden Schneckenpaar, verwendet. Der Außendurchmesser der Schnecken betrug 30 mm. In den Gehäuseschuß 0, der mit einer oben-liegenden Dosieröffnung versehen war, wurden alle Komponenten, ausgenommen der Komponente B1), dosiert. Die Gehäuseschüsse 2 und 3 enthalten die Aufschmelzzone, so daß das Extrusionsgut bei Verlassen des Gehäuseschusses 3 schmelzeflüssig vorliegt. Komponente B1) wurde in den Gehäuseschuß 4 dosiert. Die Schnecke war in den Gehäuseschüssen 4 bis 10 nur mit fördernden Elementen versehen.

SE-II:

Gleicher Schneckenextruder wie bei SE-I, wobei jedoch im Gehäuseschuß 6 die Schnecke mit einem Mischelement, welches kaum Scherwirkung entfaltet, versehen war.

SE-V-I (zum Vergleich):

Gleicher Schneckenextruder wie bei SE-I, wobei jedoch im Gehäuseschuß 6 die Schnecke mit mehreren Mischelementen, die in Kombination eine deutliche Scherwirkung entfalten, versehen war.

<u>Herstellung der Formmassen und Formkörper:</u>

Die Komponenten A) bis B) und ggf. C) (jeweilige Gew.-teile s. Tabelle 1) wurden zur Bestimmung der in Tabelle 1 genannten mechanischen Eigenschaften und Brandeigenschaften in den ebenfalls in Tabelle 1 widergegebenen Schneckenextrudern homogenisiert und zu Standardformkörpern spritzgegossen.

Tabelle 1: Zusammensetzung und Eigenschaften der Formmassen (vorangestelltes V: zum Vergleich, nb: nicht bestimmt)

| Beispiel | 1 | 2 | V-3 |
|---|---|---|---|
| Zusammensetzung [Gew.-teile] | | | |
| Schneckenextruder | SE-I | SE-II | SE-V-I |
| a-I | 22,6 | 22,6 | 22,6 |
| a-II | 50,0 | 50,0 | 50,0 |
| b1-I | 12,0 | 12,0 | 12,0 |
| b2-I | 15,0 | 15,0 | 15,0 |
| b3-I* | 0,4 | 0,4 | 0,4 |
| Eigenschaften | | | |
| $D_a$ der Komponente B1) [μm] | 107 | 97 | 86 |
| $D_n$ der Komponente B1) [μm] | 25 | 24 | 24 |
| $D_a/D_n$ der Komponente B1) | 4,3 | 4,0 | 3,6 |
| Kerbschlagzähigkeit $a_k$ bei 23°C [kJ/m$^2$] | 3,0 | 2,9 | 3,0 |
| Nachbrennzeit** t1 [s] | 1,3 | 1,6 | 1,2 |
| Nachbrennzeit** t2 [s] | 6,3 | 6,7 | >30 |
| * gerechnet als Feststoff<br>** Mittelwert aus 5 Einzelmessungen | | | |

Die Beispiele belegen, daß die gemäß den erfindungsgemäßen Verfahren hergestellten thermoplastischen Formmassen enthaltend expandierbaren Graphit gegenüber bekannten Formmassen eine verbesserte Kombination aus flammhemmenden und mechanischen Eigenschaften aufweisen.

## Patentansprüche

1. Verfahren zur Herstellung thermoplastischer Formmassen enthaltend

   A) 39 bis 99 Gew.-% mindestens eines thermoplastischen Polymers,
   B) 1 bis 60 Gew.-% einer Flammschutzmittelkomponente enthaltend B1) einen expandierbaren Graphit, und
   C) 0 bis 60 Gew.-% weiterer Zusatzstoffe,

   wobei die Gewichtsprozente jeweils auf das Gesamtgewicht der Komponenten A) bis C) bezogen sind und zusammen 100 Gew.-% ergeben,
   durch Schmelzevermischung der Komponenten A), B) und, falls vorhanden, C) in einem Schneckenextruder, wobei der Schneckenextruder ein DoppelschneckenExtruder ist und entlang der Förderrichtung in dieser Reihenfolge mindestens eine Dosierzone, eine Plastifizierzone, eine Homogenisierzone und eine Austragszone umfaßt, **dadurch gekennzeichnet, daß** die Dosierung des expandierbaren Graphits B1) in den Doppelschnecken-Schneckenextruder an einer Stelle erfolgt, hinter der - in Förderrichtung betrachtet - die Extruderschnecke keine Scherelemente umfaßt.

2. Verfahren gemäß Anspruch 1, **dadurch gekennzeichnet, daß** die Dosierung des expandierbaren Graphits B1) in den Schneckenextruder an einer Stelle erfolgt, hinter der - in Förderrichtung betrachtet - die Extruderschnecke nur fördernde Schneckenelemente umfaßt.

3. Verfahren gemäß Ansprüchen 1 bis 2, **dadurch gekennzeichnet, daß** die Dosierung des expandierbaren Graphits B1) in den Schneckenextruder zwischen Homogenisierzone und Austragszone erfolgt.

4. Verfahren gemäß Ansprüchen 1 bis 3, **dadurch gekennzeichnet, daß** die Flammschutzmittelkomponente B)
   B1) einen expandierbaren Graphit,
   B2) eine Phosphor enthaltende Flammschutz-Verbindung und
   B3) ein fluorhaltiges Polymer umfaßt.

5. Verfahren gemäß Anspruch 4, **dadurch gekennzeichnet, daß** die Flammschutzmittelkomponente B)

   20 bis 79,99 Gew.-% der Komponente B1),
   20 bis 79,99 Gew.-% der Komponente B2) und
   0,01 bis 4 Gew.-% der Komponente B3) umfaßt,

   wobei die Gewichtsprozente jeweils auf das Gesamtgewicht der Komponenten B1) bis 83) bezogen sind und zusammen 100 Gew.-% ergeben.

6. Verfahren gemäß Ansprüchen 1 bis 5, **dadurch gekennzeichnet, daß** Komponente B2) mindestens eine Verbindung ausgewählt aus anorganischen oder organischen Phosphaten, Phosphiten, Phosphonaten, Phosphatestern, rotem Phosphor und Triphenylphosphinoxid ist.

7. Verfahren gemäß Ansprüchen 1 bis 6, **dadurch gekennzeichnet, daß** Komponente B3) ein fluoriertes Ethylenpolymerisat ist.

8. Thermoplastische Formmassen, **dadurch gekennzeichnet, daß** sie nach einem der Verfahren gemäß Ansprüchen 1 bis 7 hergestellt sind und nach dem Austrag aus dem Doppelschneckenextruder das Verhältnis aus dem flächengewichteten Mittelwert (Flächenmittel $D_a$) und dem arithmetischen Mittelwert (Zahlenmittel $D_n$) der Teilchengrößenverteilung $D_a/D_n$ des expandierbaren Graphits B1) in den thermoplastischen Formmassen im Bereich von 3,7 bis 6 liegt und das Flächenmittel $D_a$ des expandierbaren Graphits B1) in den thermoplastischen Formmassen im Bereich von 50 $\mu$m bis 1000 $\mu$m liegt.

9. Verwendung der thermoplastischen Formmassen gemäß Anspruch 8 zur Herstellung von Fasern, Folien, Formkörpern und Schäumen.

10. Fasern, Folien, Formkörper und Schäume, erhältlich aus den thermoplastischen Formmassen gemäß Anspruch 8.

## Claims

1. A process for the preparation of thermoplastic molding materials comprising

   A) from 39 to 99% by weight of at least one thermoplastic polymer,
   B) from 1 to 60% by weight of a flameproofing component comprising

      B1) an expandable graphite, and

   C) from 0 to 60% by weight of further additives,

   the percentages by weight being based in each case on the total weight of the components A) to C) and together giving 100% by weight,
   by mixing melts of the components A), B) and, if present, C) in a screw extruder, where the screw extruder is a twin-screw extruder, and comprises at least one metering zone, one plasticating zone, one homogenization zone and one discharge zone in this sequence along the conveying direction,
   which comprises metering of the expandable graphite B1) into the twin-screw extruder at a point behind which - viewed in the conveying direction - the extruder screw comprises no shearing elements.

2. The process according to claim 1, wherein the metering of the expandable graphite B1) into the screw extruder is effected at a point behind which- viewed in the conveying direction - the extruder screw comprises only conveying screw elements.

3. The process according to claims 1 and 2, wherein the metering of the expandable graphite B1) into the screw extruder is effected between homogenization zone and discharge zone.

4. The process according to claims 1 to 3, wherein the flameproofing component B) comprises

   B1) an expandable graphite,
   B2) a flameproofing compound comprising phosphorus and
   B3) a fluorine-containing polymer.

5. The process according to claim 4, wherein the flameproofing component B) comprises
   from 20 to 79.99% by weight of the component B1),
   from 20 to 79.99% by weight of the component B2) and
   from 0.01 to 4% by weight of the component B3),
   the percentages by weight being based in each case on the total weight of the components B1) to B3) and together giving 100% by weight.

6. The process according to claims 1 to 5, wherein component B2) is at least one compound selected from inorganic or organic phosphates, phosphites, phosphonates, phosphate esters, red phosphorus and triphenylphosphine oxide.

7. The process according to claims 1 to 6, wherein component B3) is a fluorinated ethylene polymer.

8. A thermoplastic molding material which is prepared by one of the processes according to claims 1 to 7 and wherein, after discharge from the twin-screw extruder, the ratio of the area-weighted average (area average $D_a$) and the arithmetic average (number average $D_n$) of the particle size distribution $D_a/D_n$ of the expandable graphite B1) in the thermoplastic molding materials is in the range from 3.7 to 6 and the area average $D_a$ of the expandable graphite B1) in the thermoplastic molding materials is in the range from 50 $\mu$m to 1000 $\mu$m.

9. The use of the thermoplastic molding material according to claim 8 for the production of fibers, films, moldings and foams.

10. A fiber, film, molding or foam obtainable from the thermoplastic molding material according to claim 8.

## Revendications

1. Procédé de préparation de compositions de moulage thermoplastiques comprenant

   A) 39 à 99 % en poids d'au moins un polymère thermoplastique,
   B) 1 à 60 % en poids d'un composant retardateur de flamme contenant un graphite expansible B1), et
   C) 0 à 60 % en poids d'autres additifs,

   les pourcentages en poids étant tous exprimés par rapport au poids total des composants A) à C), qui, ensemble, représentent 100% en poids,
   par mélange à l'état fondu des composants A), B) et, s'il est présent, C), dans une extrudeuse à vis, laquelle extrudeuse à vis consiste en une extrudeuse à double vis et qui, selon la direction de fonctionnement, comporte successivement et selon cet ordre, au moins une zone de dosage, une zone de plastification, une zone d'homogénéisation et une zone de décharge,
   **caractérisé en ce que** le dosage du graphite expansible B1) est effectué dans l'extrudeuse à double vis en une zone derrière laquelle, selon la direction de fonctionnement, la vis d'extrudeuse ne comprend pas d'éléments de cisaillement.

2. Procédé selon la revendication 1, **caractérisé en ce que** le dosage du graphite expansible B1) dans l'extrudeuse à vis est en une zone derrière laquelle, selon la direction de fonctionnement, la vis d'extrudeuse ne comprend que des éléments de vis.

3. Procédé selon les revendications 1 à 2, **caractérisé en ce que** le dosage du graphite expansible B1) dans l'extrudeuse à vis est réalisé entre la zone d'homogénéisation et la zone de décharge.

4. Procédé selon les revendications 1 à 3, **caractérisé en ce que** le composant retardateur de flamme B) contient:

   B1) un graphite expansible
   B2) une composition retardatrice de flamme contenant du phosphore,
   B3) un polymère contenant du fluor.

5. Procédé selon la revendication 5, **caractérisé en ce que** le composant retardateur de flamme B) contient:

   20 à 79,99 % en poids de composant B1),
   20 à 79,99 % en poids du composant B2) et
   0,01 à 4 % en poids du composant B3),

   les pourcentages en poids étant tous exprimés par rapport au poids total des composants B1) à B3), qui, ensemble, représentent 100% en poids,

6. Procédé selon les revendications 1 à 5, **caractérisé en ce que** le composant B2) est au moins un composé choisi parmi les phosphates minéraux ou organiques, les phosphites, les phosphonates, les esters de phosphate, le phosphore rouge et l'oxyde de triphénylphosphine ;

7. Procédé selon les revendications 1 à 6, **caractérisé en ce que** le composant B3) est un polymère d'éthylène fluoré.

8. Compositions de moulage thermoplastique **caractérisé en ce qu'**elles sont obtenues à partir du procédé selon une quelconque des revendications 1 à 7, et **en ce que** après décharge de l'extrudeuse à double vis le rapport exprimé en valeur moyenne pondérée en fonction de la surface (moyenne des surfaces $D_a$) et la valeur moyenne arithmétique (moyenne numérique $D_n$) de la distribution des dimensions des particules $D_a/D_n$ du graphite expansé B1) dans la composition thermoplastique de moulage est compris entre 3,7 et 6 et **en ce que** la surface moyenne $D_a$ du graphite expansé B1) dans la composition thermoplastique est comprise entre 50$\mu$m et 1000$\mu$m.

9. Utilisation des compositions de moulage thermoplastiques selon la revendication 8 pour la fabrication de fibres, de films, de moulures et de mousses

10. Fibres, films, moulures et mousses obtenues à partir des compositions de moulage thermoplastiques selon la revendications 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03046071 A1
- WO 0034367 A
- WO 0034342 A
- EP 0824134 A
- KR 19960001006
- US 20060118989 A
- EP 07112183 A
- EP 07116636 A
- WO 9535335 A
- WO 9740079 A
- DE 1300266 B
- DE 1495730 A
- WO 0061664 A
- WO 0015718 A
- WO 0026274 A
- US 3737409 A
- EP 1567883 B
- DE 10321081 A
- DE 3140520 A
- DE 2925208 A
- US PS4403075 A
- EP 8486 B
- WO 9813412 A


### In der Beschreibung aufgeführte Nicht-Patentliteratur


- **A.F. HOLLEMANN ; E. WIBERG.** Lehrbuch der Anorganischen Chemie. Walter des Gruyter und Co, 1964, 166-177
- **HOUBEN-WEYL-MÜLLER.** Organische Phosphorverbindungen Teil II. Thieme-Verlag Stuttgart, 1963
- **SCHILDKNECHT.** Vinyl and Related Polymers. Wiley-Verlag, 1952, 484-494
- **WALL.** Fluorpolymers. Wiley Interscience, 1972
- **MILEWSKI, J.V. ; KATZ, H.S.** Handbook of Reinforcements for Plastics. Van Nostrand Reinholt Company Inc, 1987, 233 ff
- **SAECHTLING.** Kunststoff-Taschenbuch. Hanser Verlag, 1995, 191-246